# EUROPEAN PATENT APPLICATION

(11) **EP 1 826 075 A1**
(43) Date of publication of application: **29.08.2007**
(21) Application number: 07425097.8
(22) Date of filing: 21.02.2007
(51) Int. Cl.: B60R 25/00, B60R 25/02, B60T 3/00, B62H 5/00

(54) **Passive safety lock device**

(30) Priority: 21.02.2006 IT BA20060009; 27.02.2006 IT BA20060011
(71) Applicant: Kaziani Spiridione Antonio, 70050 Bari, S. Spirito (IT)
(72) Inventor: Kaziani Spiridione Antonio, 70050 Bari, S. Spirito (IT)
(74) Representative: Capasso, Olga

(57) **Abstract**

Anti-theft device (1) for vehicles in general and relative fitting procedure, said device comprising a removable anti-forcing support (10), a removable passive device (30) and a suitable connecting bracket (20) between the two above-mentioned parts of the device.
The removable anti-forcing support (10) is made up of a threaded metal bar (11), capable of being secured immovably, through the application of two-part chemical resins (13), in the box-section cavity (14) of the chassis (3) of the motor vehicle. The removable passive device (30) is made up of a robust metal casing (31) in the form of a wedge, equipped, on its base or longest face, with an open sliding guide and enclosing inside it a lock (36), operating with a security key (37). Said wedge is capable of being fitted and secured removably onto a bracket (20) equipped with a pair of mushroom-shaped or button-headed pins (23), between which the locking bolt (38) of the lock (36) is inserted in the process of locking the lock itself.

## Description

### Field of the art

The present invention concerns an anti-theft device to lock the steering of the wheels of a motor vehicle, which includes a metal support, to be fixed integrally and immovably to the chassis under the front door of the motor vehicle, and a removable passive device, fixed to the above support by means of a suitable bracket.

### State of the known art

Up to now, all the various passive mechanical anti-theft devices on the market, made to be installed on motor vehicles for the purpose of preventing attempts at theft, have not had the expected success, because they are attached at points of the car subject to easy forcing by professional thieves. In fact, the current installation of all types of steering locks, wheel locks, pedal locks, gearbox locks and similar, has essentially a purely deterrent character only in the eyes of a simple casual thief, but is not effective when confronted with a determined attack by a professional thief.

The principal disadvantage is that the anti-theft devices are not secured and anchored to structurally robust parts of the motor vehicle itself. A further disadvantage is represented by the fact that they require to be connected to parts and mechanical components of the motor vehicle in such a way that, at times, they alter the homologated characteristics of the said parts and components, as does, for example, the attachment of anti-theft steering locks which require modifications and adaptations to the steering column, including drilling the steering column or alterations due to welding.

### Object of the invention

The principal object of the present invention is to resolve the said problems and disadvantages. The author has identified a point in the bodywork of the motor vehicle, in particular the frame under the front door which, without altering its homologated characteristics, allows the secure connection of an anchorage support, thus creating an extremely robust anchorage base onto which, in its turn, it is possible to connect a removable passive anti-theft device, and, in particular, a device which allows the steering of the wheels of the motor vehicle to be locked.

Another object of the present invention is to create a suitable bracket which allows the removable wheel-locking device, which prevents the front wheels of the car from being steered, to be rigidly connected to the movable metal support, anchored to the chassis under the front door of the vehicle itself.

The attachment of a support or anchorage base to the door-sill of the motor vehicle, attached indifferently on the right-hand or the left-hand side or both, is completely innovative both in the way of carrying out the fitting, which does not alter the structural characteristics of the sill, and in the concept that this support can serve as an anchorage for removable passive anti-theft devices.

The chassis or loadbearing sills of motor vehicles are usually made up of metal sections of suitable thickness, depending on the mass and the stresses for which the motor vehicle itself is designed, profiled in suitable shapes according to the design of the manufacturing company, prestamped, provided with various ribs and joined by arc welding, in such a way as to create box sections which are at the same time structurally light and strong, to which are appropriately welded and assembled, by the same manufacturing company, the bodywork and other constituent parts of the motor vehicle.

The object of the present invention is therefore to increase the anti-forcing security of anti-theft devices for motor vehicles, by creating a highly secure product which is simple to construct, capable of batch fabrication, practical and easy to install for the technician who fixes the support bracket to the vehicle's door-sill frame for the first time (the operation is easy even for an unskilled mechanic) and practical and easy for fitting and removal by the user who leaves the motor vehicle parked for longer or shorter periods of time.

### Description of the invention

The subject of the invention is an anti-theft device (1) to lock the steering of the front wheels (6) of a motor vehicle (2), characterised by comprising at least one movable anti-forcing support (10) comprising a threaded bar (11), anchored to a point on the chassis or loadbearing sill (5) of the motor vehicle (2), and at least one removable wheel-locking device (30), said support (10) and said wheel-locking device (30) being connected to each other by a connecting bracket (20). Preferably the removable wheel-locking device (30) is in the shape of a wedge or prismatic parallelepiped.

In a preferred form the movable support (10) is anchored to the box-section cavity (14) of the door-sill (4), that is to say at the sharp bend which the chassis usually presents in proximity to the front steerable wheels (6), most preferably at a point on the chassis or loadbearing sill (5) of the motor vehicle (2) by means of two-part chemical resins (13).

In a preferred form the threaded bar (11) presents a free section (12) protruding from the box-section cavity (14), of a length such as to clear the contours of the bodywork of the mudguard panel (15), to which the removable wheel-locking device (30) is secured through the bracket (20) in such a way as to prevent the front wheels (6) from steering.

In a preferred form the removable wheel-locking device (30) presents on its base or longest face (32) a sliding guide (33) open at one of its ends (34) and closed on the opposite side.

In a preferred form the removable wheel-locking device (30) contains inside it means of locking onto bracket (20), preferably consisting in a lock (36) activated with a security key (37), through a keyhole located in the face perpendicular to face (32), corresponding to the closed side of the sliding guide (33); this key activates a locking bolt (38) which locks the device (30) onto the bracket (20).

In a preferred form the bracket (20) connecting to the movable anti-forcing support (10), which is anchored rigidly to the chassis of the motor vehicle, is constituted by a metal plate (21) secured, on one side, in movable manner, to the free section protruding from said support, an anti-cutting sleeve (22) having previously been fitted; and having, on the opposite side, a pair of robust pins with mushroom-shaped or button-shaped heads (23) which slide, during the stage of fitting and removing, inside the sliding guide (33) and between which the locking bolt (38) is inserted when the lock (36) is locked by means of the security key (37).

A further subject of the invention is a movable anti-forcing support (10) for removable anti-theft devices for motor vehicles, characterised by comprising a threaded metal bar (11), capable of being secured immovably to the motor vehicle, preferably in the box-section cavity (14) of the door-sill (4) of the motor vehicle, most preferably by the application of two-part chemical anchoring resins (13). Two-part polyester resins are preferred.

The threaded bar (11), thus inserted and embedded by means of the chemical resin (13) in the cavity (14) in the door-sill (4), constitutes the point of attachment of the removable passive device (30) through the interposition of a suitable support bracket (20).

In a preferred form, the threaded metal bar (11) has a diameter of about 20 millimetres and a length variable between about 30 and 40 centimetres.

In a preferred form, the threaded metal bar (11) presents a free section (12) protruding from the box-section cavity (14), of length such as to clear the contours of the bodywork of the mudguard panel (15).

In a preferred form, the anti-forcing support (10) comprises also a connecting bracket (20).

A further subject of the invention is a procedure for fitting an anti-forcing support (10), characterised in that the threaded bar (11) is introduced into the box-section cavity (14) through a hole (16), coaxially with the axis of hole (17), the cavity having previously been filled with high-strength polymer resin (13), capable of rigidly locking the threaded bar (11) to the chassis (3,4).

A further subject of the invention is a removable wheel-locking device (30) for locking the steering of the front wheels (6) of a motor vehicle (2), characterised by being constituted by a metal casing in the shape of a wedge or prismatic parallelepiped, capable of being secured, through a bracket (20), to an anti-forcing support removably anchored to the chassis or loadbearing sill (5) of the motor vehicle (2). Preferably on the base or longest face (32) there is a sliding guide (33), open at one of its ends (34) and closed on the opposite side. Preferably it contains inside it a lock (36) activated by a security key (37), through a keyhole located in the face perpendicular to face (32), adjacent to the closed side of the sliding guide (33); this key (37) activates a locking bolt (38) which locks the device (30) onto the bracket (20).

In a preferred form the metal casing in the shape of a wedge or prismatic parallelepiped has a profile such as to make it ergonomic to grip, in order to facilitate the operations of fitting and removing, through the process of sliding the connecting bracket (20) along the sliding guide (33) for the purpose of making a robust anchorage with the removable support (10) when the locking bolt (38) is locked.

A further subject of the invention is a procedure for fitting a removable wheel-locking device to the free section protruding from a movable anti-forcing device, characterised by the following stages: following possible fitting of the anti-cutting sleeve (22) onto the free section, the bracket (20) is anchored immovably by means of, for example, a welding operation; the wheel-locking device is then fixed, with the vehicle (2) stationary, lightly pressing the front tyre (6) towards the outside of the vehicle and causing the pair of pins with mushroom-shaped or button-shaped heads (23) to slide along the open sliding guide (33) of the anti-theft device itself (30), so as to allow the insertion of the locking bolt (38) between the said pins, once the device (30) has slid on the said pins, simply by turning the security key (37) in the keyhole (39) of the lock (36).

Anti-theft device (1) represents a very effective product since with its removable part (30), it opposes and locks the steering of the front wheels (6) of a vehicle (2), and with its movable part (10,20) it represents an extremely robust anti-forcing support fixed to the loadbearing chassis (3) of the car (2), without altering its structural characteristics, as happens with many other parts of the vehicle, according to the design of the manufacturing company.

### Brief description of the drawings

These objects and the consequent advantages, as well as the characteristics of the invention according to the present invention, will become more clearly evident from the following detailed description of a preferred embodiment, which is described by way of example, but without limiting effect, with reference to the drawings, in which:
- Fig. 1 represents a schematic lateral view of a generic motor vehicle (2), showing the positioning of the anti-theft device (1), fitted to the door sill (4) in proximity to the steerable front wheel (6);
- Fig. 2 represents a three-dimensional view of a sill or chassis (3) of a generic motor vehicle (2), in which a circle is used to highlight the detail (5) of the door-sill (4) where the threaded bar (11) is secured;
- Fig. 3 represents a schematic view, in a transverse section of the door-sill (4), of the anti-theft device (1) constituted by its three basic parts: the movable anti-forcing support (10), following the insertion of the threaded bar (11) into the box-section cavity (14) and its being gripped in the chemical resin (13); the removable passive device (30), of wheel-locking type, which obstructs the steering of the front left wheel (6); and finally the connecting bracket (20) which links the two previous items, with the addition of a sleeve (22);
- Fig. 4 represents a schematic view of a transverse section of the door-sill (4), which shows the chemical resin (13), anchoring the threaded metal bar (11) inside the box-section chassis (14) of the door-sill (4), illustrating its position in a view from above with respect to the profile of the steerable front left wheel (6) of the motor vehicle;
- Fig. 5 represents a schematic view of the same section as Fig. 4, in two different stages of assembly preceding the insertion of the threaded bar (11): at the moment when the drilling of the chassis has been performed, before injecting the chemical resin (13); and after the injection of the said resin has taken place;
- Fig. 6 represents a schematic three-dimensional view of the support bracket (20) and the optional sleeve (22), specifically designed for securing the wheel-locking device (30) to the support (10), as provided by the preferred embodiment of the invention;
- Fig. 7 represents a schematic three-dimensional view of the passive removable device (30) of wheel-locking type in the form of a wedge, as provided by the preferred embodiment of the invention;
- Fig. 8 represents a schematic view (in the direction designated View "A" in Fig. 7) of a longitudinal section of the wheel-locking device (30), before fitting to the support bracket (20);
- Fig. 9 represents a schematic view (in the direction designated View "B" in Figs. 7 and 8) of a transverse section of the wheel-locking device (30), before fitting to the support bracket (20).

### Legend

| Reference | Definition |
|---|---|
| 1 | Anti-theft device |
| 2 | Generic car |
| 3 | Loadbearing sill of the motor vehicle |
| 4 | Door sill |
| 5 | Detail of the door sill |
| 6 | Steerable wheel |
| 7 | Wheel axis |
| 10 | Movable anti-forcing support |
| 11 | Threaded bar |
| 12 | Free section of threaded bar |
| 13 | Chemical resin |
| 14 | Box-section cavity |
| 15 | Mudguard panel |
| 16 | Hole |
| 17 | Axis of the hole |
| 20 | Support bracket |
| 21 | Metal plate |
| 22 | Sleeve |
| 23 | Mushroom-headed or button-headed pins |
| 30 | Removable passive anti-theft device, locking the wheel |
| 31 | Metal casing |
| 32 | Longest face of wedge |
| 33 | Open sliding guide |
| 34 | End of long face of wedge 32 |
| 35 | Rounded edges |
| 36 | Lock |
| 37 | Key |
| 38 | Locking bolt |
| 39 | Keyhole for lock |

### Method of implementing the invention

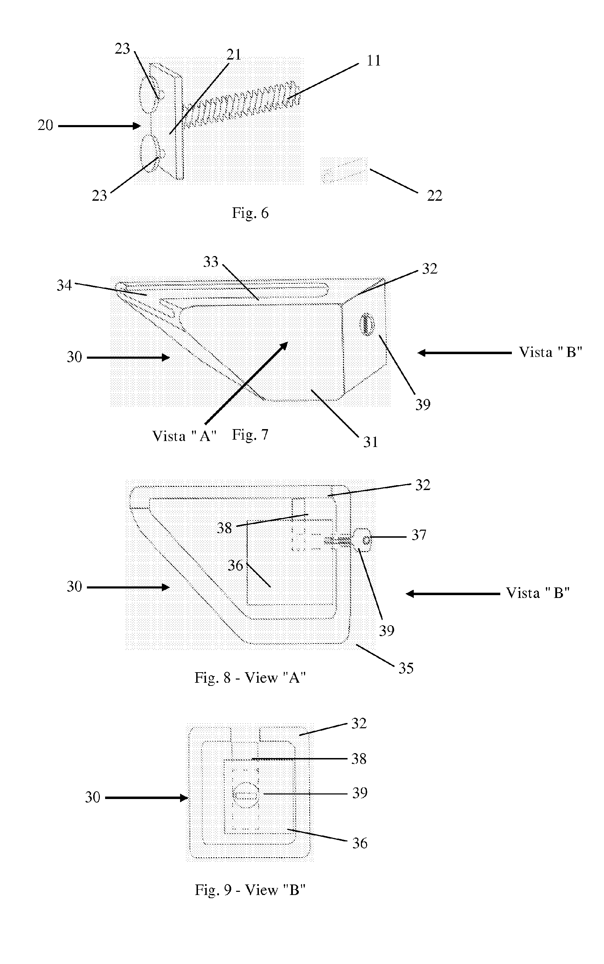

In reference to the attached drawings, the anti-theft device (1) is made up of:
a) an anti-forcing support (10), which consists essentially of a threaded bar (11), anchored immovably by a chemical resin (13), injected into the door-sill chassis (4) of a motor vehicle (2), exactly corresponding to the area where the threaded bar (11) is inserted;
b) a passive removable device (30) of wheel-locking type, which consists of a metal casing (31) of prismatic wedge shape, equipped on the longest side (32) with a sliding guide (33) open at one end (34) and enclosing inside it a lock (36) opened with a key (37), of which in Figs 7 and 9 only the keyhole (39) is visible, whose action moves a locking bolt (38), represented in the locked position in Figs. 8 and 9, capable of blocking the sliding of the device (30) when it is inserted, by means of its guide (33) onto the bracket (20);
c) a connecting bracket (20) which consists of a metal plate (21), equipped with a pair of mushroom-headed or button-headed pins (23), fitted with an optional anti-cutting collar or sleeve (22), capable of optimising the resistance to forcing of the protruding section of the threaded bar (11) of support (10), bracket rigidly connected immovably to the door-sill (4) by means of the threaded bar (11).

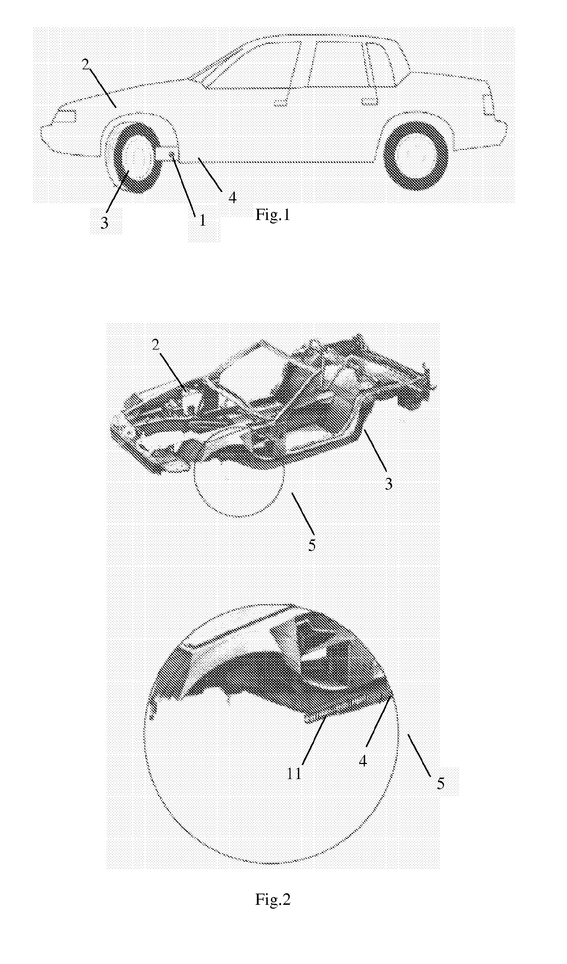

The precise insertion point found for making the base of the anchorage of the anti-theft device (1) is, as has already been said and as is visible in Fig. 2, the part of the chassis (3) of the motor vehicle (2) to the rear of the front steerable wheels (6), indicated previously by the name door-sill (4) in Fig. 2. It can be positioned indifferently to protect the left-hand or the right-hand side of the motor vehicle (2), or supports (10) can be provided on both sides of the car with the possibility of fitting device (30) indifferently on the left or the right, according to which of the steerable wheels (6) is more accessible after parking.

In the example given in the attached drawings, it has been chosen, solely for the purpose of example and without limiting effect, to show the application of the anti-theft device (1) in proximity to the wheel (6) located on the left-hand side (Figs. 1-3).

In the preferred solution, the invention presents a high degree of constructional simplicity, with evident savings in fabrication and installation costs, as well as unparalleled ergonomics compared with traditional anti-theft devices for motor vehicles, such as steering lock, pedal lock, external wheel clamp etc. In fact, the compactness of device (30) needs to be emphasised: although being a prismatic metal casing in the shape of a wedge, it is endowed with a plurality of rounded edges (35), which facilitate its being gripped in conditions of extreme safety on the part of the user, and avoid accidental damage to the tyres.

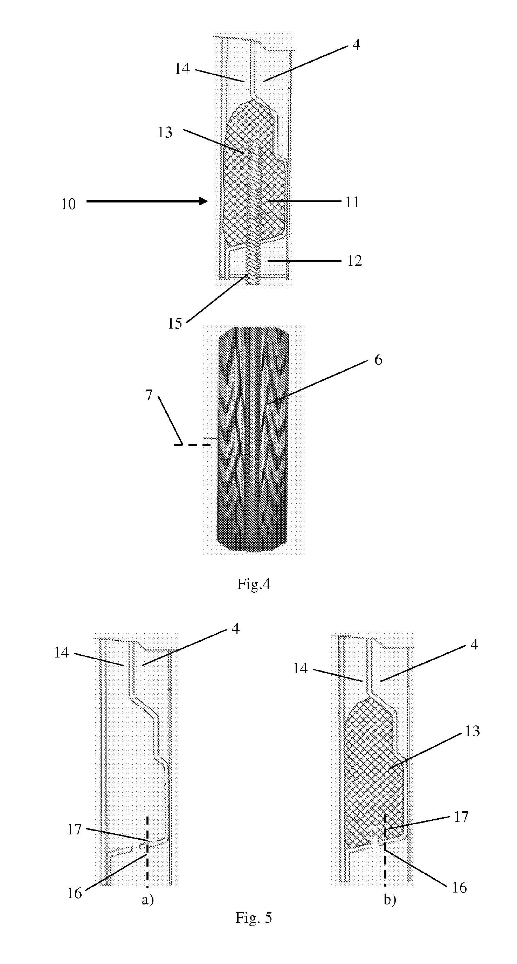

The procedure for fitting the anti-theft device (1) is as follows: in proximity to said area of the door-sill (4), to be precise at the end of the sharp bend in the sheet metal to the rear of the front wheel (6), as is clear from Figs. 1-4, after removing the front mudguard (15) which is made of plastic, and possibly, for greater convenience of working, the front wheel (6), make a hole (16) in said door-sill (4), as is visible in Fig. 5a. After making the hole (16), inject, through the same hole, a suitable quantity of two-part chemical cement or chemical resin (13) into the box-section cavity (14), as is visible in Fig. 5b. This quantity of chemical resin (13) injected is variable, depending on the size of the cross-section area of the box-section cavity (14) and the depth to which it is filled.

Said chemical resin (13), for example a chemical anchor consisting of two-part polyester resin, if used with a diameter of about 20 millimetres for hole (16), and therefore also for the threaded bar (11), ensures extremely high resistance to cutting and traction.

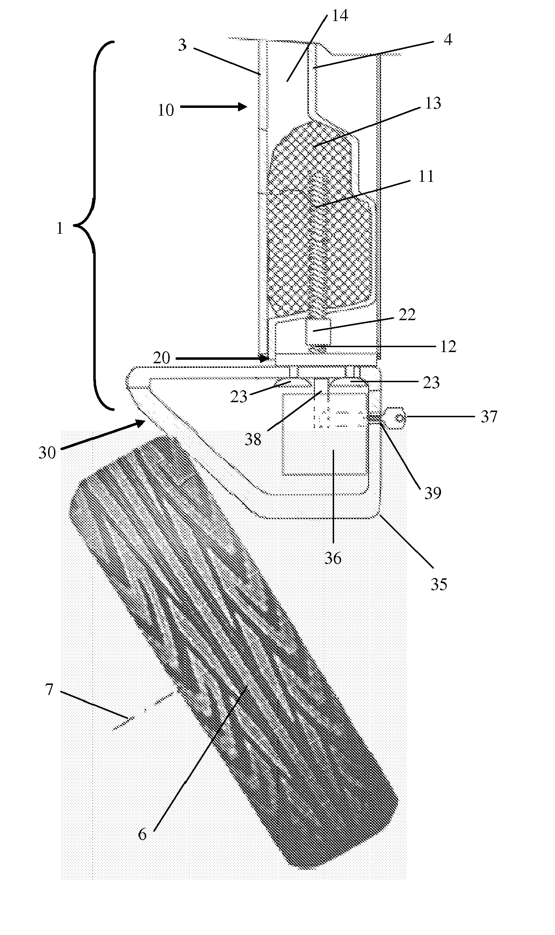

Once the filling of the box section cavity (14) of the door-sill (4) with chemical resin (13) has been performed, proceed with the insertion, coaxially with axis (17) of the said hole (16), of the anti-forcing support (10). This consists, in the preferred solution, of a threaded metal bar (11), preferably about 30-40 centimetres in length, taking care to allow a section (12) of the said threaded bar (11) to protrude from the said hole (16) formed in the box section cavity (14) of the door sill (4), as is visible in figures 3 and 4, of a length equal to the degree to which the contours of the bodywork of the mudguard panel (15) are cleared.

The metal bar (11) is threaded to ensure an optimal grip when it is embedded in the chemical resin (13), ensuring very high resistance characteristics against forcing.

Following possible fitting of the optional anti-cutting sleeve (22) onto the free section (12), bracket (20) is anchored immovably to the protruding free section (12) of the threaded bar (11) by means of, for example, a welding operation.

Once bracket (20) is rigidly fixed, it is possible as a result to secure the anti-theft device (30), with the vehicle (2) stationary, lightly pressing the front tyre (6) towards the outside of the vehicle (therefore, the left wheel towards the left and the right wheel towards the right) and causing the pair of pins with mushroom-shaped or button-shaped heads (23) to slide along the open sliding guide (33) in the anti-theft device (30). This allows the insertion of the locking bolt (38) between the said pins, once the device (30) has slid onto the said pins, simply by turning the security key (37) in the keyhole (39) of the lock (36). As is clear from Fig. 3, by being inserted between the pins (23), said locking bolt (38) solidly clamps device (30) to bracket (20), consequently obstructing the steering of the front wheels (6) of the car (2).

The advantages deriving from the present invention consist in having designed an anti-theft device for vehicles, made up of components that are very simple and inexpensive to find on the market, with in addition a considerable reduction in installation costs.

It is also evident that numerous revisions, adaptations, additions, variations and replacement of elements with others which are fundamentally equivalent, can be applied to the embodiment which is described above for illustrative purposes and without limiting effect, without, moreover, going outside the protective scope of the claims which follow.

Finally, it is evident that the anti-forcing support (10), as described, can also be used in combination with other anti-theft devices. In the same way, the passive wheel-locking device (30) can be used with different types of support and/or anchorage.

## Claims

1. Anti-theft device (1) to lock the steering of the front wheels (6) of a motor vehicle (2), **characterised by** comprising at least one removable anti-forcing support (10) comprising a threaded bar (11), anchored to a point on the chassis or loadbearing sill (5) of the motor vehicle (2), and at least one removable wheel-locking device (30), said support (10) and said wheel-locking device (30) being connected to each other by a connecting bracket (20).

2. Anti-theft device (1) according to claim 1, **characterised in that** said removable wheel-locking device (30) is in the shape of a wedge or prismatic parallelepiped.

3. Anti-theft device (1) according to one of the preceding claims, **characterised in that** said removable support (10) is anchored to the box-section cavity (14) of the door sill (4).

4. Anti-theft device (1) according to one of the preceding claims, **characterised in that** said removable support (10) is anchored to a point on the chassis or loadbearing sill (5) of the motor vehicle (2) by means of two-part chemical resins (13).

5. Anti-theft device (1) according to one of the preceding claims, **characterised in that** the threaded bar (11) presents a free section (12) protruding from the box-section cavity (14), of a length such as to clear the contours of the bodywork of the mudguard panel (15), onto which the removable wheel-locking device (30) is secured by means of the bracket (20) in such a way as to obstruct the steering of the front wheels (6).

6. Anti-theft device (1) according to one of the preceding claims, **characterised in that** said removable wheel-locking device (30) presents on its base or longest face (32) a sliding guide (33) open at one of its ends (34) and closed on the opposite side.

7. Anti-theft device (1) according to one of the preceding claims, **characterised in that** said removable wheel-locking device (30) contains inside it means of locking onto the bracket (20).

8. Anti-theft device (1) according to claim 7 in which said locking means consist of a lock (36) activated by a security key (37), through a keyhole located in the face perpendicular to face (32), in proximity to the closed side of the sliding guide (33); said key activating a locking bolt (38) which locks the device (30) onto the bracket (20).

9. Anti-theft device (1) according to claim 8, **characterised in that** the bracket (20) connecting to the removable anti-forcing support (10), which is anchored rigidly to the chassis of the motor vehicle, is constituted by a metal plate (21) secured, on one side, in removable manner, to the free protruding section of said support, an anti-cutting sleeve (22) having previously been fitted; and having, on the opposite side, a pair of robust pins with mushroom-shaped or button-shaped heads (23) which slide, during the stage of fitting and removing, inside the sliding guide (33) and between which the locking bolt (38) is inserted when the lock (36) is locked by means of the security key (37).

10. Removable anti-forcing support (10) for removable anti-theft devices for motor vehicles, **characterised by** comprising a threaded metal bar (11), capable of being secured immovably to the motor vehicle.

11. Anti-forcing support (10) according to claim 10, **characterised in that** the threaded metal bar (11) is secured immovably in the box-section cavity (14) of the door sill (4) of the motor vehicle.

12. Anti-forcing support (10) according to claims 10 or 11, **characterised in that** said threaded metal bar (11) is secured immovably in the box-section cavity (14) by the application of two-part chemical anchoring resins (13).

13. Anti-forcing support (10) according to claim 12 in which said two-part resin is a two-part polyester resin.

14. Anti-forcing support (10) according to one of claims 10 to 13, **characterised in that** said threaded metal bar (11) has a diameter of about 20 millimetres and a length variable between about 30 and 40 centimetres.

15. Anti-forcing support (10) according to one of claims 10 to 14, **characterised in that** said threaded metal bar (11) presents a free section (12) protruding from the box-section cavity (14), of length such as to clear the contours of the bodywork of the mudguard panel (15).

16. Anti-forcing support (10) according to one of claims 10 to 15, **characterised by** also comprising a connecting bracket (20).

17. Procedure for fitting an anti-forcing support (10) as described in claims 10 to 16, **characterised in that** the threaded bar (11) is introduced into the box-section cavity (14) through a hole (16), coaxially with the axis of hole (17), the chamber having previously been filled with high-strength polymer resin (13), capable of rigidly locking the threaded bar (11) to the chassis (3,4).

18. Removable wheel-locking device (30) for locking the steering of the front wheels (6) of a motor vehicle (2), **characterised by** being constituted by a metal casing in the shape of a wedge or prismatic parallelepiped, capable of being secured, through a bracket (20), to an anti-forcing support immovably anchored in the chassis or loadbearing sill (5) of the motor vehicle (2).

19. Removable wheel-locking device (30), according to claim 18, **characterised in that** on its base or longest face (32) there is a sliding guide (33) open at one of its ends (34) and closed on the opposite side.

20. Removable wheel-locking device (30), according to claim 18 or 19, **characterised in that** it contains inside it a lock (36) activated by a security key (37), through a keyhole located in the face perpendicular to face (32), in proximity to the closed side of the sliding guide (33); this key (37) activates a locking bolt (38) which locks the device (30) onto the bracket (20).

21. Removable wheel-locking device (30), according to one of claims 18 to 20, **characterised in that** the metal casing in the shape of a wedge or prismatic parallelepiped has a profile such as to make it ergonomic to grip, to facilitate the operations of fitting and removal, through the process of sliding the connecting bracket (20) along the sliding guide (33) for the purpose of making a robust anchorage with the removable support (10) when the locking bolt (38) is locked.

22. Procedure for fitting a removable wheel-locking device, as described in claims 18 to 21, to the free section protruding from a movable anti-forcing support, **characterised by** the following stages: following possible fitting of the anti-cutting sleeve (22) onto the free section, bracket (20) is anchored immovably, for example through a welding operation; then, with the vehicle (2) stationary, the wheel-locking device is secured, lightly pressing the front tyre (6) towards the outside of the car and causing the pair of pins with mushroom-shaped or button-shaped heads (23) to slide along the open sliding guide (33) of the anti-theft device itself (30), so as to allow the insertion of the locking bolt (38) between the said pins, once the device (30) has slid onto them, simply by turning the security key (37) in the keyhole (39) of the lock (36).
